# EUROPÄISCHE PATENTSCHRIFT

(11) **EP 0 531 797 B1**
(45) Veröffentlichungstag und Bekanntmachung des Hinweises auf die Patenterteilung: **25.10.2000**
(21) Anmeldenummer: 92114504.1
(22) Anmeldetag: 26.08.1992
(51) Int. Cl.: F16D 43/206

(54) **Überlastkupplung**
Overload coupling
Embrayage de surcharge

(30) Priorität: 13.09.1991 DE 4130471; 09.07.1992 DE 4222574
(43) Veröffentlichungstag der Anmeldung: 17.03.1993
(73) Patentinhaber: Girguis, Sobhy Labib, D-53842 Troisdorf (DE)
(72) Erfinder: Girguis, Sobhy Labib, D-53842 Troisdorf (DE)
(74) Vertreter: Pollmeier, Felix, Dipl.-Ing.

(56) Entgegenhaltungen:
- EP-A- 0 167 415
- DE-A- 3 443 072
- DE-U- 8 806 205
- FR-A- 2 529 280
- GB-A- 1 517 693
- GB-A- 2 165 899

## Beschreibung

Die Erfindung betrifft eine Überlastkupplung mit einem Kupplungskörper, dessen Planfläche Ausnehmungen aufweist, mehreren am Umfang verteilten Sperrkörpern, bestehend aus primären und sekundären Mitnehmern, einem Führungskörper, in dem die sekundären Mitnehmer angeordnet sind und mittels einer in der Hauptrichtung axial wirkenden Federkraft die primären Mitnehmer in die Flanken der Ausnehmungen vorspannen, wobei mindestens ein sekundärer Mitnehmer einen primären Mitnehmer unter Einwirkung der Federkraft in Umfangsrichtung unmittelbar vorspannt.

Eine solche Überlastkupplung ist durch die FR-A-2 529 280 bekanntgeworden. Es ist hier nur ein radial vorgespannter, primärer Mitnehmer vorgesehen, wobei der Führungskörper im Kupplungskörper drehbar gleitgelagert ist. Damit der Führungskörper zum Kupplungskörper bei Überlast frei drehen kann, muß die Drehlagerung eine radiale Spielpassung aufweisen, welche sich bei Verschleiß noch erhöht. Dadurch wird eine Drehnachgiebigkeit der Überlastkupplung verursacht, und zwar sowohl in der einen als auch in der anderen Drehmomentrichtung. Bei einer Drehmomentumkehr verdoppelt sich der Betrag der Drehnachgiebigkeit. Dem nur einen radialbeweglichen primären Mitnehmer dieser Überlastkupplung ist eine radial gerichtete Federanordnung zugeordnet, die nur eine entsprechend geringe Leistungsdichte zuläßt. Zum Anzeigen des Abschalt- bzw. Einschaltvorganges ist zudem ein aufwendiger Umlenkmechanismus erforderlich, der einen Ring in axialer Richtung zu bewegen vermag. Schließlich ist ein Rollenhalter mit einer zylindrischen Stützfläche zum zylindrischen, primären Mitnehmer hin vorgesehen, wobei diese Stützfläche mittig belastet wird, wenn kein Drehmoment übertragen wird; tritt ein Drehmoment auf, so wird die Stützfläche seitlich in der einen oder anderen Richtung belastet. Hierdurch ist eine weitere Drehnachgiebigkeit der Überlastkupplung unvermeidlich, welche sich beim Verschleiß der zylindrischen Stützfläche erhöht und bei Drehmomentumkehr verdoppelt. Der primäre Mitnehmer wird von dem sekundären Mitnehmer mittelbar über den Rollenhalter geführt, der den primären Mitnehmer nahezu um 180° flächenmäßig umschlingt und diesen somit in diesen Bereich festlegt.

Bei einer aus dem DE-U-88 06 205.8 bekannten Überlastkupplung, die als nächstliegender Stand der Technik angesehen wird, sind die primären Mitnehmer als Rastkugeln ausgebildet und jeweils in einer Haltebohrung der Halteplatte bzw. des Führungskörpers geführt, wobei die Position der Rastkugel formschlüssig bestimmt wird. Die Federkraft wird der Rastkugel über mindestens zwei ebenfalls geführte, als Stützkugeln ausgebildete sekundäre Mitnehmer vermittelt, wobei die Position der Rastkugel noch einmal bestimmt wird. Die Position der jeweiligen Rastkugel, aber auch der Stützkugeln in der Halteplatte ist somit überbestimmt, wodurch unerwünschte Zwangskräfte zustandekommen, welche die Reibung und den Verschleiß erhöhen und die Schaltgenauigkeit bzw. Endpräzision der Kupplung herabsetzen. Die Drehmomentübertragung zwischen den Rastkugeln und ihren Haltebohrungen führt zu einer verschleißintensiven Gleitreibung. Weisen die Haltebohrungen der Rastkugeln Spiel auf, kann es eintreten, daß die Rastkugeln bei einem kleineren Drehmoment im Bereich des Spieles unter den Stützkugeln herunterrutschen, wobei sich dann ein Nachgeben bzw. eine relative Drehbewegung zwischen dem An- und Abtrieb einstellt. Die Kupplung kann dabei bis zum eigentlichen Ausrastmoment weiterlaufen, wobei die Rastkugeln aus den Rastausnehmungen herausbefördert werden, was bedeutet, daß die Kupplung beim Durchfahren des kleineren Drehmomentes nicht drehspielfrei betrieben werden kann. Nach einer Ausführung der bekannten Überlastkupplung werden die Stützkugeln von einer schrägen Fläche der Halteplatte abgestützt, welche in Richtung der Feder öffnend ausgebildet ist. Dies erfordert eine vergleichsweise erheblich stärkere Feder zur Vorspannung der Kugeln.

Der Erfindung liegt die Aufgabe zugrunde, eine gattungsgemäße Überlastkupplung so zu gestalten, daß bei relativ einfachem Aufbau eine vom Verschleiß unabhängige, drehspielfreie und weitgehend drehsteife Drehmomentübertragung ermöglicht wird.

Diese Aufgabe wird erfindungsgemäß dadurch gelöst, daß die primären Mitnehmer zum Führungskörper in Umfangsrichtung in unbelastetem Zustand freibeweglich angeordnet sind (d.h. einen freien Abstand zum Führungskörper einnehmen), ohne beweglich in radialer Richtung zu sein. Die einen freien Abstand zum Führungskörper einnehmenden primären Mitnehmer sind mittels einer in der Hauptrichtung axial wirkenden Federkraft in die Flanken der Ausnehmungen vorgespannt. Es kann daher eine große Anzahl von am Umfang verteilten, axial vorgespannten primären Mitnehmern bzw. Sperrkörpern in einem vorgegebenen Rotationsraum parallel angeordnet werden, so daß sich die Leistungsdichte erheblich steigern läßt. Aufgrund der unmittelbaren Vorspannung ist ein separates Teil zwischen dem primären und sekundären Mitnehmer nicht erforderlich, wodurch die Überlastkupplung einfacher, kostengünstiger, kompakter und zuverlässiger wird. Wenn die Überlastkupplung kein Drehmoment überträgt, werden die primären Mitnehmer von der Vorspannung in Umfangsrichtung positioniert. Beim Drehmoment wandelt sich die Vorspannkraft in eine Übertragungskraft ohne Richtungsänderung, was bedeutet, daß die Überlastkupplung weitgehend drehsteif wirkt, und zwar unabhängig vom Verschleiß bzw. von der Drehmomentumkehr. Die Positionen der primären Mitnehmer sind somit nicht überbestimmt und unterliegen keiner Zwangsführung wie das bei der bekannten Kupplung der Fall ist. Die sekundären Mitnehmer lassen sich ebenfalls ungehindert bewegen und gegen Arbeitsflächen eines Fensters des Führungskörpers spreizen, womit eine stets spielfreie Übertragung und ein selbsttätiges Nachstellen bei Verschleiß erreicht wird.

Die sekundären Mitnehmer sind für die Drehmomentübertragung zum Führungskörper in der jeweiligen Drehmomentrichtung bestimmt. Hierbei werden bei nur einem sekundären Mitnehmer für eine Drehmomentrichtung der primäre und sekundäre Mitnehmer gegen die gegenüberliegenden Arbeitsflächen vorgespannt, so daß jeder Verschleiß bzw. jegliches Spiel bei hoher Drehsteife auf einfache Weise ausgeglichen werden. Sind sekundäre Mitnehmer für jede der Drehmomentrichtungen und damit mindestens zwei sekundäre Mitnehmer vorgesehen, so werden diese durch den primären Mitnehmer gespreizt und gegen die einander gegenüberliegenden Arbeitsflächen des Fensters verspannt, mit dem gleichen Ergebnis wie zuvor beschrieben, das heißt die auftretenden Momente lassen sich spielfrei und verschleißunabhängig übertragen. Als besonders vorteilhaft macht sich hier außerdem bemerkbar, daß nur die beiden sekundären Mitnehmer an den Arbeitsflächen angreifen, so daß der primäre Mitnehmer relativ weit in die gegenüberliegende Ausnehmung einzutreten vermag, was es erlaubt, die Ausnehmungen mit relativ steilen Flanken zu versehen. Dies ermöglicht es, eine nur vergleichsweise schwache Feder zur Vorspannung der Mitnehmer einzusetzen, so daß sich die Kupplung relativ klein und leicht bauen läßt.

Nach einem Vorschlag der Erfindung kann eine der Arbeitsflächen des Fensters zumindest bereichsweise in Richtung der Ausnehmungen schräg öffnend ausgebildet werden. Dadurch kann unter Beibehaltung der Drehspielfreiheit und Starrheit der Kupplung die zur Vorspannung erforderliche Federkraft weiterhin entscheidend verringert werden.

Wenngleich es vorteilhaft ist, so ist es doch nicht zwingend erforderlich, die sekundären Mitnehmer als Wälzkörper vorzusehen; sie können auch als Gleitkörper ausgebildet sein, so daß eine allseitige Flächenberührung ermöglicht wird. Bei ihrer Ausbildung als Wälzkörper werden die auftretenden Reibkräfte vorteilhaft reduziert. Dies macht sich besonders stark bemerkbar, da abweichend vom Stande der Technik, bei dem sich die kraftübertragende Mitnehmer während der Abschaltung des Drehmomentes vorwiegend gleitend mit einer Linienberührung entlang der belasteten Arbeitsflächen bewegen, nach der Erfindung jedoch die Mitnehmer sich im wesentlichen rollend abwälzen. Hierdurch wieder läßt sich die erfindungsgemäße Überlastkupplung gegenüber vergleichbaren bekannten höher belasten bzw. kleiner ausführen und/oder deren Standzeit erheblich verlängern.

Damit die relative Position des primären zu den sekundären Mitnehmern bei Überlast im wesentlichen bestehen bleibt, sieht die Erfindung vor, daß die Richtung der zwischen dem primären Mitnehmer und einer ihn tangierenden Flanke übertragenen Kraft gegen die Richtung der Federkraft eine Neigung aufweist, die nicht größer ist als die der zwischen dem primären und sekundären Mitnehmer übertragenen Kraft. Anderenfalls kann der primäre Mitnehmer zunächst bei einem ersten Drehmoment unter den sekundären herunterrutschen und alsdann bei einem zweiten höheren Drehmoment von den Flanken der Ausnehmungen angehoben werden.

Mit als Wälzkörpern ausgebildeten Mitnehmern ist eine Linienberührung zwischen dem primären Mitnehmer und dem Kupplungskörper zugunsten einer größeren übertragbaren Kraft herstellbar, und ebenfalls zwischen dem sekundären Mitnehmer und der Arbeitsfläche bzw. der unter Federkraft stehenden Druckscheibe. Um die Übertragung zwischen primären und sekundären Mitnehmern zu optimieren wird vorgeschlagen, diese mit konformen Profilen zu versehen. Eine weitere Weiterbildung zur Erhöhung der übertragbaren Leistung ist darin zu sehen, den primären Mitnehmer mit einer Anzahl von sekundären Mitnehmern allseitig zu führen, so daß jeweils mehrere sekundäre Mitnehmer in die Übertragung von Kräften eingeschlossen werden. Weiterhin können die primären und sekundären Mitnehmer mit unterschiedlichen Durchmessern ausgeführt werden, und es kann auch ein sekundärer Mitnehmer einer Übertragungsrichtung einen anderen Durchmesser aufweisen als der anderen Übertragungsrichtung.

Nach einer weiteren Ausbildung von Synchronkupplungen wird die Druckscheibe gegen den Kupplungskörper axial verschiebbar geführt und die einander zugewandten Seiten des Führungskörpers und der Druckscheibe sind mit einer Zahn- bzw. Lückenkombination ausgestattet, welche nur in einer oder in mehreren vorbestimmten Drehpositionen koppelbar sind. Hierdurch wird die Synchronisierung von der Übertragung getrennt, so daß die Leistungsdichte der Kupplung optimiert werden kann. Diese Anordnung ist auch bei üblichen, zum Stande der Technik gehörenden Überlastkupplungen einsetzbar.

Beim Eintritt einer Überlast wird die Druckscheibe vom Führungskörper axial abgehoben. Gleichzeitig kann die Druckscheibe gegen den Führungskörper rotieren, bspw. durch die Wälzbewegung der Mitnehmer. Die kombinierte Dreh- und Hubbewegung der Druckscheibe in bezug auf den Führungskörper kann nach der Erfindung für weitergehende Ausgestaltungen der Kupplung, bspw. als Abschalt-Überlastkupplung, zunutze gemacht werden, indem der Führungskörper mit mindestens einem Anschlag versehen wird, der in den Weg mindestens eines an der Druckscheibe vorgesehenen Anschlages eingreift. Solche Anschläge können für die Begrenzung der Rotation der ausgehobenen Druckscheibe in der einen oder anderen Richtung und/oder des axialen Rückweges der abgehobenen Druckscheibe eingesetzt werden. Hierdurch werden die primären Mitnehmer nach Auftreten einer Überlast daran gehindert, in die nachfolgenden Ausnehmungen einzurasten, wonach die Überlastkupplung mit einem geringeren Restmoment weiterlaufen kann und erst beim Rückwärtsdrehen der Kupplungskörper in bezug auf den Führungskörper wieder einschaltet. Auch diese Anordnung ist bei Überlastkupplungen nach dem Stande der Technik einsetzbar.

Durch den Einsatz von Abstützkörpern zwischen den sekundären Mitnehmern und der Druckscheibe sind weitere Effekte und zweckmäßige Ausbildungen von Abschalt-Überlastkupplungen möglich.

Der Kupplungskörper kann mit einer die Ausnehmungen verbindenden Umlaufbahn ausgestattet werden, welche die Mitnehmer in der angehobenen Ebene gegen die Federkraft abstützt, oder aber von der Ebene abweicht, um bspw. die auf die Mitnehmer wirkende Federkraft zu reduzieren. Des weiteren kann die Umlaufbahn zur radialen Führung der primären Mitnehmer herangezogen werden, in Ergänzung oder anstelle der radialen Führung innerhalb der Fester des Führungskörpers. In ähnlicher Weise kann die Druckscheibe mit einer Umlaufbahn zur radialen Führung der sekundären Mitnehmer ausgestattet sein.

Die Merkmale der Erfindung sind im einzelnen anhand der folgenden Beschreibung von Ausführungsbeispielen in Verbindung mit diese darstellenden Zeichnungen erläutert. Es zeigen hierbei
- Figur 1: einen Längshalbschnitt einer Überlastkupplung in der Übertragungsposition,
- Figur 2: eine Teilabwicklung der Überlastkupplung nach Fig. 1,
- Figur 3: eine Teilabwicklung entsprechend Fig. 2 nach Abschalten des Drehmomentes,
- Figur 4: Sperrkörper nach dem Stande der Technik,
- Figur 5: einen Sperrkörper mit einem sekundären gleitenden Mitnehmer,
- Figur 6: einen Sperrkörper mit zwei sekundären gleitenden Mitnehmern,
- Figur 7: einen Sperrkörper mit einem sekundären rollenden Mitnehmer,
- Figur 8: einen Sperrkörper mit zwei sekundären rollenden Mitnehmern,
- Figuren 9 bis 11: die Belastung darstellende Programme der Mitnehmer nach Fig. 8,
- Figuren 12 und 13: unterschiedliche Anordnungen von Mitnehmern, Kupplungskörpern und Führungskörpern
- Figur 14: einen Halblängsschnitt einer Überlastkupplung in Abschaltposition,
- Figur 15: einen sekundären Mitnehmer nach Fig. 14,
- Figuren 16 bis 19: unterschiedliche Anordnungen von Mitnehmern, Kupplungskörpern bzw, Führungskörpern,
- Figur 20: im Halblängsschnitt eine Synchron-Überlastkupplung,
- Figur 21: einen Teilquerschnitt eines Kupplungskörpers nach Fig. 20,
- Figur 22: im Halblängsschnitt eine Abschalt-Überlastkupplung,
- Figur 23: ein Detail des Abschalt-Mechanismus von Fig. 22,
- Figuren 24 und 25: Anordnungen einer weiteren Abschalt-Überlastkupplung, und
- Figuren 26 und 27: Überlastelemente mit Ab- und Einschaltmechanismen.

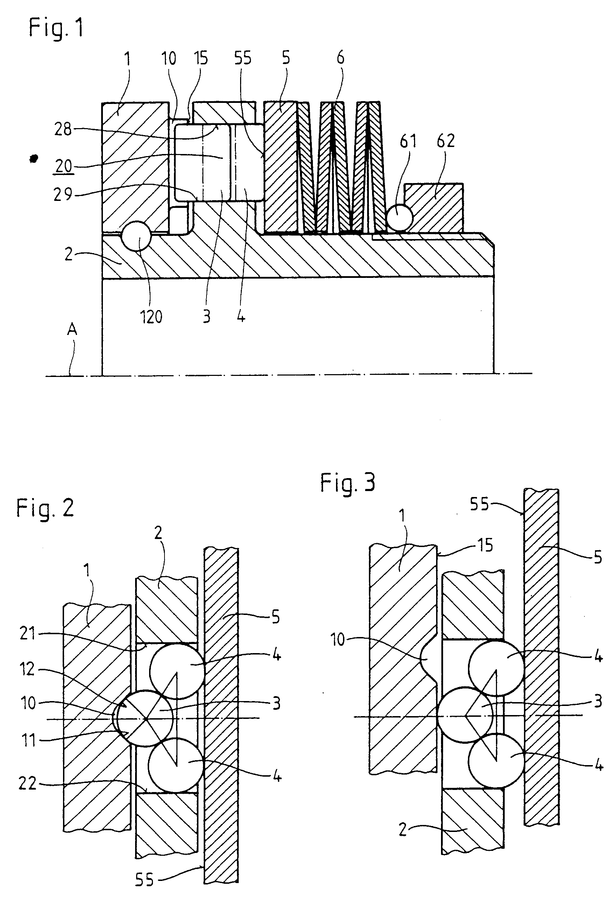

Figur 1 zeigt eine Überlastkupplung nach der Erfindung mit einem Kupplungskörper 1 und einem Führungskörper 2, welche über ein Lager 120 um die Achse A drehbar angeordnet sind. In der Planfläche 15 des Kupplungskörpers 1 ist eine von mehreren Ausnehmungen 10 dargestellt, in die ein zylindrischer primärer Mitnehmer 3 eingreift, der in einem sich axial erstreckenden Fenster 20 des Führungskörpers 2 mittels dessen Führungsflächen 28 und 29 geführt ist. Von den Führungsflächen 28 und 29 werden weiterhin zwei sekundäre Mitnehmer 4 geführt, welche von der Planfläche 55 der Druckscheibe 5 gestützt werden, und von denen nur der hinter der Zeichenebene stehende aufgezeigt ist. Zwischen der Druckscheibe 5 und dem Führungskörper 2 ist eine Federanordnung 6 vorgesehen, welche die Druckscheibe 5 über ein Drucklager 61 und eine Einstellmutter 62 vorspannt.

Eine Abwicklung der Hauptkupplungsteile in Umfangsrichtung ist in Fig. 2 verdeutlicht. Der Sperrkörper, bestehend aus einem primären Mitnehmer 3 und zwei sekundären Mitnehmern 4, ist zwischen dem Kupplungskörper 1 und der Druckscheibe 5 axial vorgespannt. Hierbei liegt der primäre Mitnehmer 3 auf den geneigten Flanken 11 und 12 der Ausnehmung 10 auf und spannt den Kupplungskörper 1 gegen Verdrehen vor. Die sekundären Mitnehmer 4 sind zwischen dem primären Mitnehmer 3 und den Arbeitsflächen 21 und 22 des Fensters 20 gehalten, so daß der Führungskörper 2 ebenfalls gegen Verdrehen vorgespannt ist. Hierdurch wird eine drehspielfreie Drehmomentübertragung gesichert, wobei ein hohes Maß an Drehstarrheit durch die Vorspannung geboten wird. Tritt ein Verschleiß an den Arbeitsflächen 21 bzw. 22 ein, so wird dieser durch das Dreiecksverhältnis der Mitnehmer 3 und 4 prismenartig ausgeglichen, indem die sekundären Mitnehmer etwas weiter auseinandertreten. Ein Verschleiß an den Flanken 11 und 12 wird durch diese Prismenführung ebenfalls kompensiert.

Das Drehmoment wird somit von dem Kupplungskörper 1 zu dem Führungskörper 2 über den primären und die zwei sekundären Mitnehmer 3 und 4 übertragen. Wird das Nennmoment überschritten, so schaltet die Kupplung aus und ihre Teile nehmen die in Fig. 3 dargestellte Lage ein. Der Führungskörper 2 bspw. steht still, und der Kupplungskörper 1 läuft weiter. Der primäre Mitnehmer 3 wird gegen die Kraft der Federanordnung aus der Ausnehmung 10 herausgewälzt, schiebt die sekundären Mitnehmer 4 hierbei zurück und liegt nunmehr auf der Planfläche 15 des Kupplungskörpers 1 auf. Bei den nachfolgenden Ausnehmungen schaltet die Kupplung ratschenartig jeweils wieder ein und aus, bis die Überlast behoben oder der Antrieb stillgelegt ist.

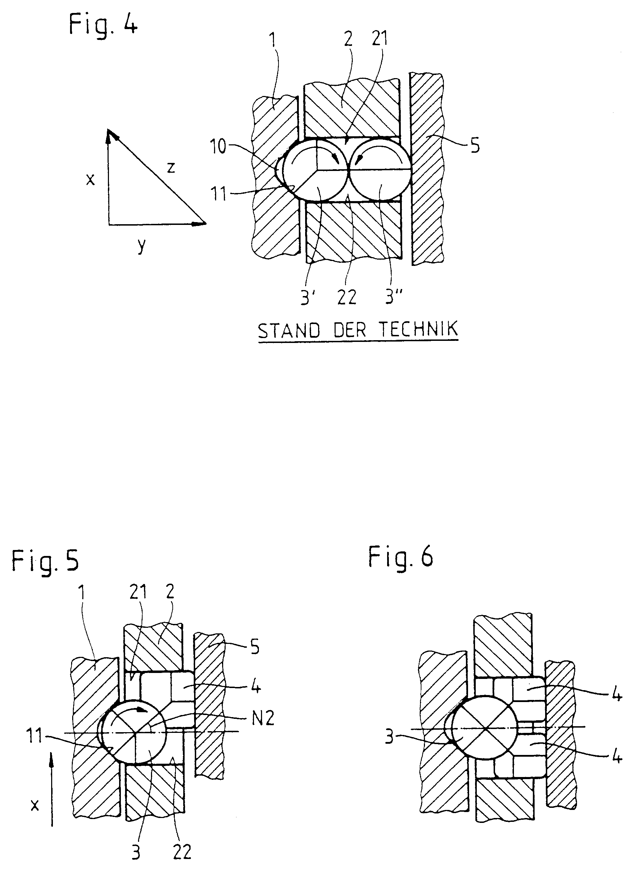

Fig. 4 zeigt eine Ausführung nach dem Stande der Technik bei einer Drehmomentübertragung, bei der die Flanke 11 die größere Umfangslast trägt. Hierbei wird vom Mitnehmer 3' nur die Arbeitsfläche 21 belastet. Ein etwaiges Spiel zwischen dem Mitnehmer 3' und den Arbeitsflächen 21 und 22 kumuliert sich dann auf der Seite der Arbeitsfläche 22. Kehrt die Drehmomentübertragung um, so erscheint das Spiel auf der anderen Seite: Die Überlastkupplung ist mit Drehspiel behaftet. Wird der Mitnehmer 3' mit Pressung verbaut, so reduziert sich die Wiederholgenauigkeit der Kupplung, die Wärmeentwicklung nimmt zu, die Mitnehmer 3' neigen sogar dazu, auf der Flanke 11 zu gleiten, der Verschleiß erhöht sich, und schließlich tritt doch ein Drehspiel ein.

Der Verschleiß der Arbeitsfläche einer solchen Kupplungsbauart ist aber auch bei einer Spielpassung recht hoch. Bei Überlast steht der Führungskörper bspw. still, und der Kupplungskörper 1 läuft weiter um. Da die Normalkraft auf der Flanke 11 größer ist als die Umfangskraft auf der Arbeitsfläche 21, so ist die Haftreibung zur Flanke 11 hin in aller Regel auch größer. Der Mitnehmer 3' rollt daher auf der Flanke 11 im Uhrzeigersinn und muß deshalb auf der Arbeitsfläche 21 in Hubrichtung gleiten. Läuft der Kupplungskörper mit einer Umfangsgeschwindigkeit "x", so teilt sich diese in eine Komponente "z" entlang der Flanke 11 und "y" in axialer Hubrichtung. Der Mitnehmer 3' dreht sich mit der Umfangsgeschwindigkeit "z" im Uhrzeigersinne und gleitet auf die Arbeitsfläche 21 mit derselben Umfangsgeschwindigkeit "z" zuzüglich der Hubgeschwindigkeit "y". Die höchste Belastung, die im Momente der Abschaltung auftritt, ist demnach nicht mit einer rollenden Bewegung des zylindrischen Mitnehmers 3' auf der Arbeitsfläche 21 verbunden, sondern mit einer gleitenden Bewegung im doppelten Sinne, da die Umfangsbewegung am Tangierungspunkte zu der Hubbewegung hinzutritt. Der Verschleiß ist entsprechend intensiv, die Standzeit der Kupplung gering.

Der zweite Mitnehmer 3'' wird zu der Übertragung der Umfangskräfte nicht herangezogen. Bei der Abschaltung des Drehmomentes wird dieser Mitnehmer jedoch entgegen dem Uhrzeigersinne verdreht, so daß die Druckscheibe 5 auch in Richtung "x" bewegt wird.

Figur 5 dagegen zeigt einen Sperrkörper mit einem als Wälzkörper ausgebildeten primären Mitnehmer 3, der in üblicher weise auf den Flanken 11 abrollen kann und mit einem gleitenden sekundären Mitnehmer 4. Letzterer ist auf der dem primären Mitnehmer 3 zugewandten Seite im Sinne eines Gleitlagers bzw. eines Segmentlagers ausgebildet und weist ebenfalls eine Flächenberührung mit der Arbeitsfläche 21 und der Druckscheibe 5 auf, wodurch die Flächenpressungen und der Verschleiß entsprechend reduziert werden. Die Übertragungskraft zwischen dem primären Mitnehmer 3 und dem sekundären Mitnehmer 4 ist um einen Winkel N2 zur Achsrichtung hin geneigt, wodurch beide Mitnehmer 3 und 4 auseinander und damit gegen die Arbeitsflächen 21 und 22 gespreizt werden, so daß eine spielfreie Übertragung in beiden Drehrichtungen möglich wird. Bewegt sich der Kupplungskörper 1 bei Überlast in der einen Richtung "x", so dreht sich der primäre Mitnehmer 3 im Uhrzeigersinne und neigt dadurch vorteilhaft dazu, auf der Arbeitsfläche 22 zu rollen. Ein gleitender sekundärer Mitnehmer 4 kann auch für beide Drehrichtungen eingesetzt werden, wie in Fig. 6 dargestellt. Ebenso können die primären Mitnehmer jeweils mit einem sekundären Mitnehmer gepaart werden, fortlaufend abwechselnd für die eine bzw. für die andere Drehrichtung. Ein primärer Mitnehmer kann ferner mit einem gleitenden und einem rollenden sekundären Mitnehmer zusammenwirken.

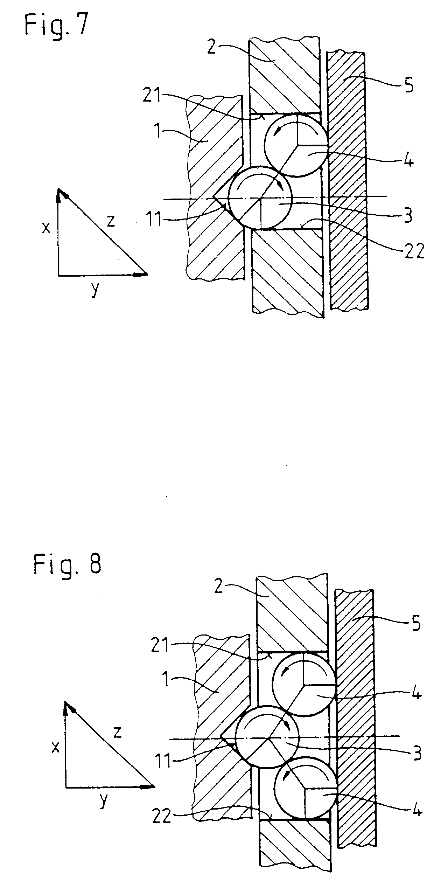

In Fig. 7 sind beide Mitnehmer 3 und 4 als Wälzkörper ausgebildet. Beim Abschalten der Drehmomentkupplung bewegt sich der Kupplungskörper 1 relativ zum Führungskörper 2 nach oben in Richtung "x", der primäre Mitnehmer 3 wälzt sich im Uhrzeigersinne auf der Arbeitsfläche 22 in Hubrichtung ab, und der sekundäre Mitnehmer 4 auf der Arbeitsfläche 21 entgegen dem Uhrzeigersinne. Da die Wälz- und die Hubgeschwindigkeit "z" und "y" ungleich sind, kommt eine Mischreibung vor. Es ist aber auch möglich, die Mitnehmer bzw. die Arbeitsflächen, wie im weiteren Verlaufe der Beschreibung erläutert wird, derart auszubilden, daß die Wälz- und die Hubgeschwindigkeit einander angeglichen werden, so daß eine vorteilhafte reine Wälzreibung erreicht wird. Die Druckscheibe 5 wird dementsprechend in Umfangsrichtung "x" bewegt.

Figur 8 zeigt eine der Fig. 7 ähnliche Anordnung, jedoch mit einem zweiten sekundären Mitnehmer 4, der sich auf der Arbeitsfläche 22 im Moment der Abschaltung zwar gegen den Uhrzeigersinn abwälzt, der jedoch eine weit geringere Last trägt. Die Druckscheibe 5 wird ebenfalls in Umfangsrichtung "x" bewegt, und zwar durch die beiden sekundären Mitnehmer 4.

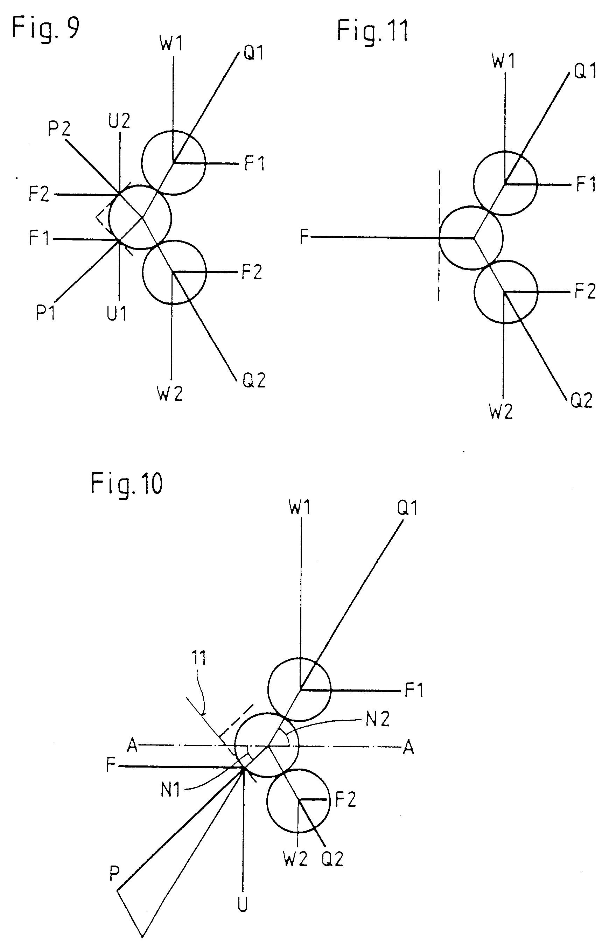

Figur 9 zeigt die Belastungsverhältnisse der Mitnehmer 3 und 4, wobei die Kupplung kein Drehmoment überträgt. Die mittels der Druckscheibe auf die sekundären Mitnehmer 4 wirkende Federkraft teilt sich in F1 und F2 auf. Der primäre Mitnehmer 3 ist durch die Flanken 11 und 12 der Ausnehmung 10 mit den Normalkräften P1 und P2 in den jeweiligen Tangierungslinien belastet, die jeweils den Umfangs- und Axialkraftkomponenten U1 und F1 bzw. U2 und F2 entsprechen. Die zwischen dem primären Mitnehmer 3 und den sekundären Mitnehmern 4 wirkenden Normalkräfte Q1 und Q2 teilen sich in Umfang- und Achsrichtung jeweils in Komponenten W1 und W2 bzw. F1 und F2 auf.

In Fig. 10 befindet sich die Kupplung im Zustande der höchsten Drehmomentübertragung bzw. beim Abschalten. Nur die Flanke 11 ist mit der maximalen Normalkraft P belastet, die einer Umfangskraft U und einer Axialkraft F entspricht. Die zwischen dem primären Mitnehmer 3 und dem oberen sekundären Mitnehmer 4 wirkenden Normalkraft Q1 teilt sich in eine Umfangskraft W1 und Federkraft F1 auf, die zwischen dem primären Mitnehmer 3 und dem unteren sekundären Mitnehmer 4 wirkende Normalkraft Q2 teilt sich in eine Umfangskraft W2 und eine Federkraft F2 auf. Der Neigungswinkel N1 der Übertragungskraft P zur Achsrichtung A-A ist kleiner als der Neigungswinkel N2 der Übertragungskraft Q1. Dadurch wird der untere sekundäre Mitnehmer 4 geringfügig abgestützt, so daß die relative Position der Mitnehmer 3 und 4 zueinander auch ohne Hilfsmittel beim Aus- und Einschalten bestehenbleibt. Reibkräfte sind bei dieser Auslegung selbstverständlich zu berücksichtigen.

Fig. 11 zeigt die Verhältnisse nach Abschalten des Drehmomentes. Der primäre Mitnehmer 3 stützt sich auf der Planfläche 15 des Kupplungskörpers 1 mit der Federkraft F ab. die Reibverluste können durch die Verminderung der Federkraft F reduziert werden, bspw. durch Federn mit einer negativen Kennlinie, durch pneumatische oder hydraulische Federvorrichtungen mit Druckentlastung, aber auch durch Synchron- oder Abschaltmechanismen bzw. durch Schrägung der Arbeitsflächen.

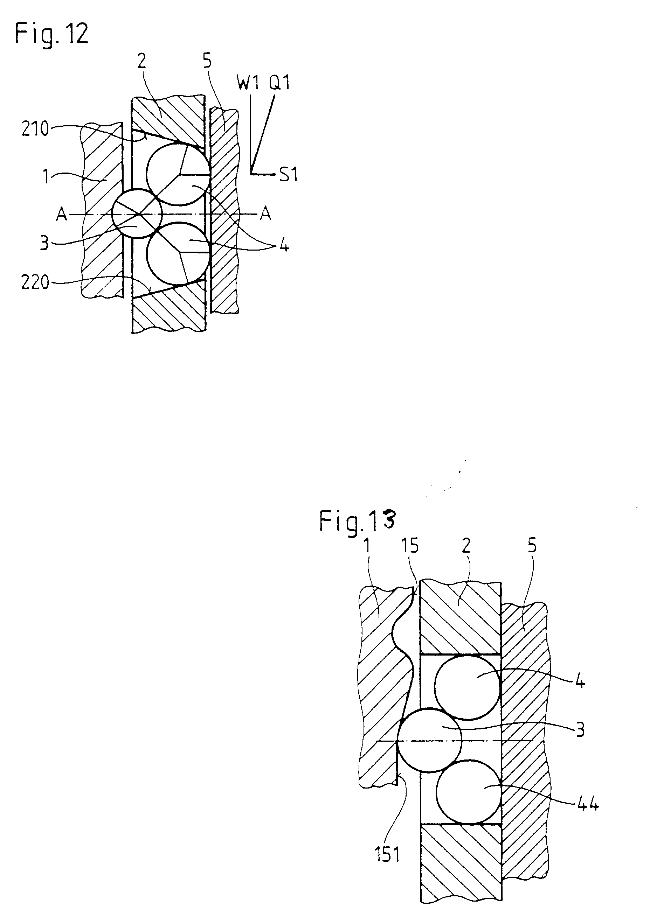

Fig. 12 zeigt eine besondere, vorteilhafte Anordnung eines Führungskörpers 2, in dem das Fenster 20 sich in Richtung auf den Kupplungskörper 1 erweiternd ausgebildet ist. Durch die Neigung der Arbeitsflächen 210 und 220, die beliebig ausgelegt werden können, wird jeweils eine axiale Komponente S1 der Übertragungskraft Q1 erzeugt, die in Richtung des Kupplungskörpers 1 wirkt und dementsprechend die Federkraft F1 (siehe Figuren 9 bis 11) reduziert. Bei der Abschaltung des Drehmomentes bewegen sich die Mitnehmer 3 und 4 in Hubrichtung gemeinsam, der Abstand zwischen den sekundären Mitnehmern verringert sich entsprechend den Neigungen der Arbeitsflächen. Auch diese Ausführung läßt sich mit jeder beliebigen Kombination von sekundären Mitnehmern verwirklichen.

Fig. 13 zeigt einen Kupplungskörper 1, in dessen Planfläche 15 vertieft angelegte Umlaufbahnen 151 vorgesehen sind. Bei abgeschalteter Kupplung werden die Mitnehmer 3 und 4 von der Federkraft F im Bereiche der Umlaufbahnen 151 völlig entlastet, und die Druckscheibe 5 liegt auf dem Führungskörper 2 auf.

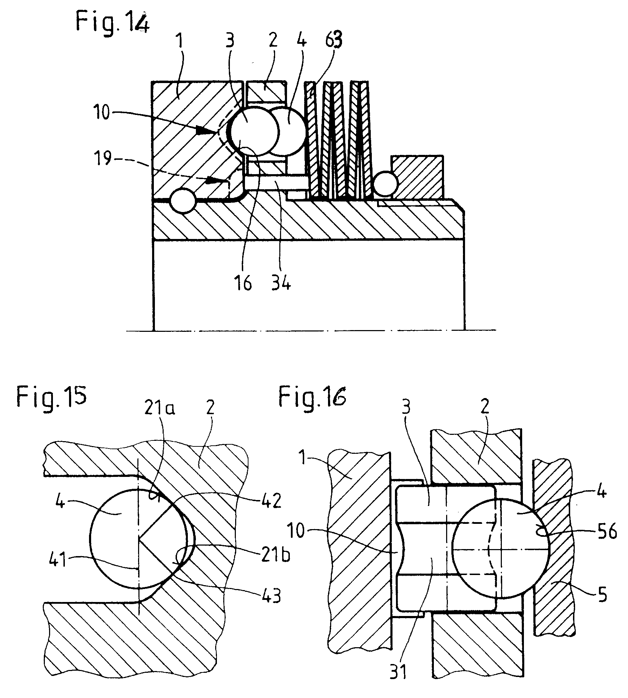

In Fig. 14 ist eine Überlastkupplung ähnlich der Fig. 1, jedoch in abgeschalteter Position, dargestellt. Die Mitnehmer 3 und 4 sind kugelförmig ausgebildet, und die Ausnehmung 10 ist punktiert gezeigt. Der primäre Mitnehmer 3 liegt auf einer entsprechend profilierten Umlaufbahn 16 auf, welche die primären Mitnehmer in radialer Richtung führt. Es kann somit auf etwaige Führungsflächen im Führungskörper 2 verzichtet werden. Die Funktion der Druckscheibe wird von einer Tellerfeder 63 übernommen. Weiterhin ist eine 360° Synchroneinrichtung bestehend aus bspw. einem im Führungskörper 2 axial geführten Sperrstift 34 und einer dazugehörigen Hilfsausnehmung 19 gezeigt.

Fig. 15 zeigt einen Querschnitt des Führungskörpers 2 von Fig. 14, bei der sekundäre Mitnehmer 4 die Teilarbeitsflächen 21a und 21b an zwei Punkten 42 und 43 berührt. Dadurch wird die Abrollgeschwindigkeit des sekundären Mitnehmers 4 auf den Arbeitsflächen 21a bzw. 21b um die Drehachse 41 geringer als die Umfangsgeschwindigkeit des Außendurchmessers. Bei der entsprechenden Wahl des Kontaktwinkels kann die Abrollgeschwindigkeit auf den Wert der Abschalt-Hubgeschwindigkeit "y" (siehe Fig. 8) reduziert werden, so daß eine reine Wälzreibung zugunsten der Wiederholgenauigkeit sowie der Standzeit der Kupplung auftritt.

In Fig. 16 ist ein abgebrochener Längsschnitt einer weiteren Anordnung gezeigt, bei der ein primärer Mitnehmerzylinder 3 zylindrisch und der sekundäre Mitnehmer 4 kugelförmig ausgebildet sind. Die Druckscheibe 5 weist eine Führungsbahn 56 auf. Der primäre Mitnehmer 3 ist in seinem mittleren Bereiche mit einer dem sekundären Mitnehmer 4 entsprechend profilierten Nut 31 ausgestattet, die zunächst eine Linien- bzw. Quasi-Linien-Berührung herstellt und ferner die Umfangsgeschwindigkeit des sekundären Mitnehmers 4 herabsetzt.

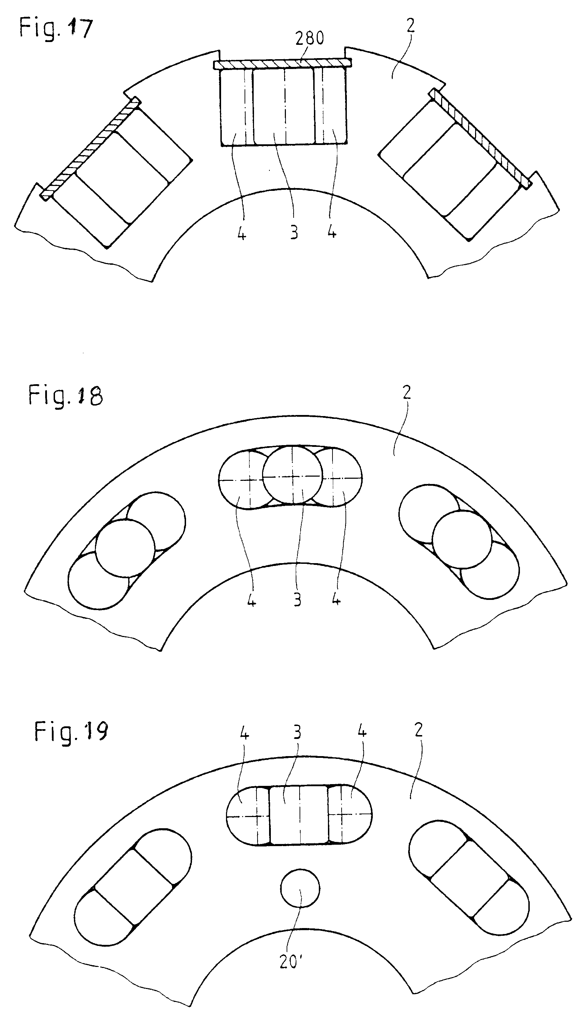

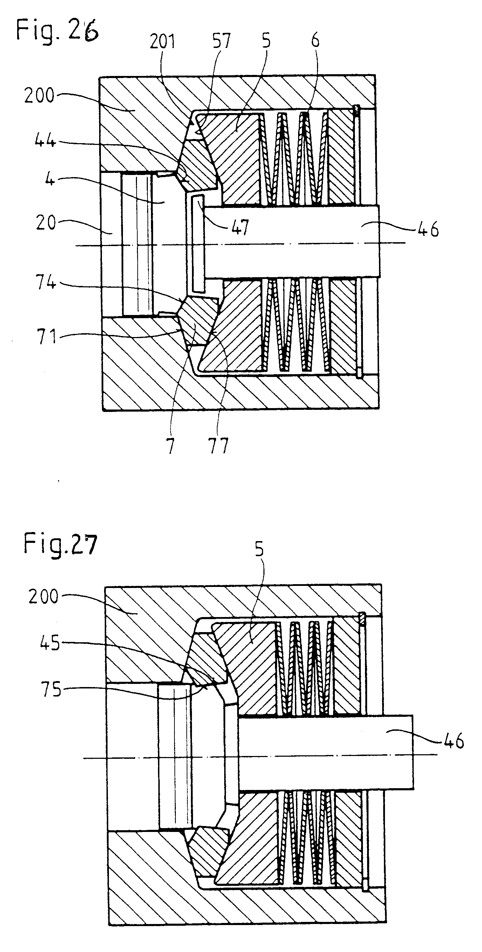

In den Fig. 27 bis 19 sind Führungskörper 2 mit Kombinationen unterschiedlicher klassischer Formen von Mitnehmern 3 und 4 gezeigt. In Fig. 17 sind der Mitnehmer 3 und die Mitnehmer 4 zylindrisch, die Fenster 20 rechteckig ausgebildet und mit einem Deckel 280 versehen. In Fig. 18 sind kugelartige Mitnehmer 3 und 4 vorgesehen, die Fenster 20 erstrecken sich in Umfangsrichtung in Form gebogener Langlöcher. Die primären Mitnehmer von Fig. 19 sind zylindrisch ausgebildet, die sekundären Mitnehmer 4 sind Kugeln, und die Fenster sind als Langlöcher ausgeführt. Weiterhin ist ein Hilfsfenster 20' auf einem anderen Teilkreis bspw. für den Sperrstift 34 von Fig. 14 dargestellt.

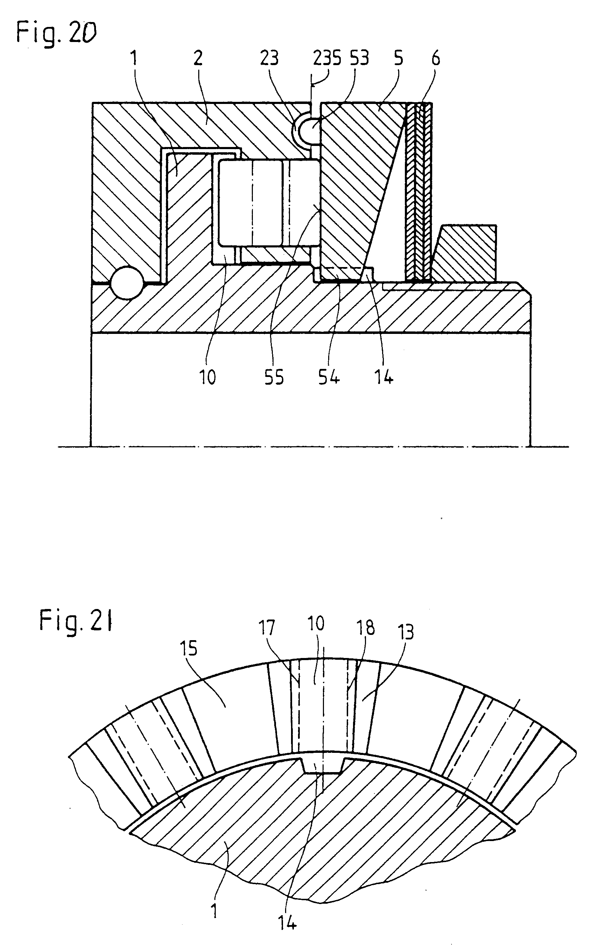

Fig. 20 zeigt eine Prinzipskizze einer 360°-Synchron-Überlastkupplung nach der Erfindung. Abweichend von Fig. 1 wird hier die Federanordnung über die Einstellmutter 82 auf den Kupplungskörper 1 abgestützt. Die Druckscheibe 5 ist mit einem Zahn 53 ausgestattet, der in eine Lücke des Führungskörpers 2 eingreift, und einen Keil 54, der in einer Nut 14 des Kupplungskörpers 2 axial geführt ist. Bei Überlast steht bspw. der Führungskörper 2 still, der Kupplungskörper 1 dreht weiter, nimmt die Druckscheibe 5 mit und hebt sie gleichzeitig gegen die Federkraft an. Der Kupplungskörper 1 dreht weiter bis zur nächsten Ausnehmung 10; der Zahn 53 stützt sich jedoch auf der Planfläche 230 ab, so daß eine Wiedereinschaltung verhindert wird. Erst nach einer vollen Umdrehung des Kupplungskörpers 1 steht der Zahn 53 wieder vor der Lücke 23, vermag in diese einzufallen, und die Kupplung schaltet wieder ein. Anstelle eines Zahnes 53 mit einer Lücke 23 lassen sich auch mehrere in ungleicher Teilung vorsehen, um eine bessere, eher symmetrische Abstützung der Federkraft zu erreichen.

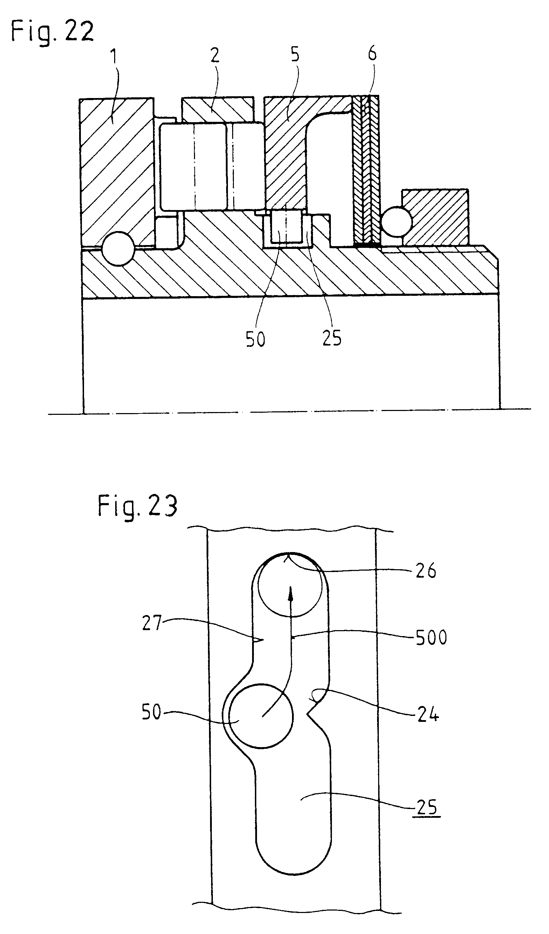

Fig. 21 zeigt einen Teilschnitt des Kupplungskörpers 1 der Fig. 23 mit den Ausnehmungen 10, der Planfläche 15 und Übergangsflächen 13. Die Berührungslinien 17 und 18 zwischen den primären Mitnehmern 3 und den Flanken der Ausnehmungen sind punktiert dargestellt. Ferner ist die Nut 14 erkennbar. Die Ausnehmungen 10 sind in gleichen Teilungsabständen vorgesehen, so daß der Umfang weitgehend belegt ist. Eine Synchron-Überlastkupplung läßt sich aber ohne weiteres auch mit einer ungleichen Teilung bzw. mit unterschiedlichen Teilkreisen herstellen; allerdings wird hierbei die Anzahl der Ausnehmungen 10 und damit die Leistungsdichte geringer.

Fig. 22 zeigt eine Prinzipskizze einer Abschalt-Überlastkupplung ähnlich der Überlastkupplung der Fig. 1. Hier ist der Druckring 5 mit einem Anschlag 50 versehen, der mit einer Nut 25 des Führungskörpers 1 zusammenwirkt. Die Abwicklung der Nut 25 in Umfangsrichtung ist in Fig. 23 dargestellt. Es wird davon ausgegangen, daß der Führungskörper 2 durch den Kupplungskörper 1 angetrieben wird. Bei Überlast steht der Führungskörper 2 still, und der Kupplungskörper 1 läuft weiter, so daß der Druckring 5 angehoben und durch die Abrollbewegung der Mitnehmer 3 und 4 in Drehrichtung versetzt wird. Der Anschlag 50 nimmt den kombinierten Weg 500 bis zum Anschlag 26 ein. Der Kupplungskörper 1 dreht allein weiter. Befinden sich die folgenden Ausnehmungen 20 den primären Mitnehmern 3 gegenüber, so stützt sich der Anschlag 50 auf dem Anschlag 27 ab, wodurch eine Wiedereinschaltung verhindert wird. Zum Wiedereinrasten wird der Kupplungskörper 1 in bezug auf den Führungskörper 2 rückwärts gedreht. Der Abstreifer 27 sorgt nun dafür, daß der Anschlag 50 in seine ursprüngliche Position formschlüssig zurückkehrt.

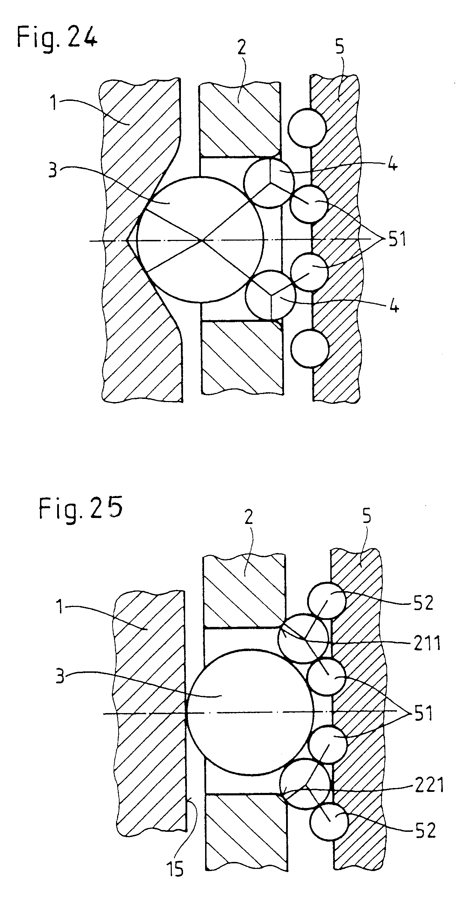

Eine weitere Ausführung einer Abschalt-Überlastkupplung ist in Fig. 24 dargestellt. Die Druckscheibe 5 weist zwei feste (oder drehbare) Abstützkörper 51 bzw. Anschläge auf, die bei der Übertragung des Drehmomentes die Federkraft zu den sekundären Mitnehmern 4 vermittelt. Die abgeschaltete Position ist in Fig. 25 gezeigt. Die sekundären Mitnehmer 4 sind jeweils zwischen den Übergangsflächen 211 einerseits und dem Abstützkörper 51 und dem Anschlag 52 andererseits eingerastet, so daß der primäre Mitnehmer 3 entlastet wird.

Eine weitere Ausführung einer Abschalt-Überlastkupplung nach der Erfindung in Form eines spielfreien Überlast-Elementes wird in Fig. 26 in ihrer eingerasteten Lage vorgestellt. Solche Elemente können bspw. am Umfang eines Flansches für eine Drehmomentübertragung befestigt werden und mit Ausnehmungen eines gegenüberliegenden Flansches zusammenwirken. Im Gehäuse 200 ist ein Fenster 20 vorgesehen, in dem nur ein von zwei sekundären Mitnehmern 4 abgebildet ist. Das Gehäuse 200, die Druckscheibe 5 und die sekundären Mitnehmer 4 weisen jeweils zwei geneigte Flächen 201, 57 und 44 auf, welche mittels zweier Keilleisten 7 über ihren geneigten Flächen 71, 74 und 77 in einer kraftschlüssigen Verbindung stehen. Zwischen der Druckscheibe 5 und dem Gehäuse 200 ist eine axiale Federanordnung 6 wirksam. Der Bolzen 46 ist mit zwei Anschlägen 47 versehen, die beim Herausnehmen der Mitnehmer 4 bzw. beim Transport oder dergleichen die Leisten 7 abzustützen vermögen. Die geneigten Flächen sind eben ausgeführt, können aber auch kegelförmig ausgebildet sein. Die sekundären Mitnehmer 4 sind als Gleitkörper ähnliche denen der Fig. 6 vorgeschlagen, können aber auch als Wälzkörper ausgebildet sein.

Fig. 27 zeigt das Überlast-Element von Fig. 26 in der abgeschalteten Position. Die sekundären Mitnehmer 4 sind gemeinsam zwischen den Keilleisten 7 eingespannt und ihrerseits zwischen dem Gehäuse 200 und der Druckscheibe 5 vorgespannt. Die Überlastkupplung bleibt ausgeschaltet. Zur Wiedereinschaltung dient der Bolzen 46, welcher die sekundären Mitnehmer 4 in ihre Ausgangsposition zurückzubringen vermag.

Als wesentlich hat sich gezeigt, daß durch die Anwendung sekundärer Mitnehmer sich Überlastkupplungen spielfrei ausbilden lassen, die sich zusätzlich durch geringen Verschleiß und damit lange Standzeiten auszeichnen. Zusätzlich macht sich noch vorteilhaft bemerkbar, daß bei der Anwendung zweier sekundärer Mitnehmer der primäre Mitnehmer durch diese unterhalb seiner Mittelebene abgestützt wird, so daß er wesentlich weiter aus dem ihn führenden Fenster auszutreten vermag, als dieses bspw. nach dem Stande der Technik gemäß Fig. 4 möglich ist. Damit aber lassen sich die im Kupplungskörper 1 angeordneten Vertiefungen 10 tiefer und insbesondere mit steileren tragenden Flanken ausführen, so daß durch die höhere Flankensteilheit Drehmomente übertragende Umfangskräfte bereits mit wesentlich geringeren Federkräften erreichbar sind, als dies bisher möglich war. Damit aber besteht die Möglichkeit, Federanordnungen 6 geringerer Kraftentwicklung einzusetzen, so daß einerseits der Verschleiß nochmals abgesenkt und infolgedessen die Standzeit vorteilhaft erhöht wird, während andererseits Federanordnungen geringerer Abmessungen als bisher verwendbar sind, so daß die Abmessungen von Überlastkupplungen vorteilhaft verringert werden können.

## Patentansprüche

1. Überlastkupplung mit einem Kupplungskörper (1), dessen Planfläche (15) Ausnehmungen (10) aufweist, mehreren am Umfang verteilten Sperrkörpern, bestehend aus primären und sekundären Mitnehmern (3, 4), einem Führungskörper (2), in dem die sekundären Mitnehmer (4) angeordnet sind und mittels einer in der Hauptrichtung axial wirkenden Federkraft die primären Mitnehmer (3) in die Flanken (11, 12) der Ausnehmungen (10) vorspannen, wobei mindestens ein sekundärer Mitnehmer (4) einen primären Mitnehmer (3) unter Einwirkung der Federkraft in Umfangsrichtung unmittelbar vorspannt,
**dadurch gekennzeichnet**,
daß die primären Mitnehmer (3) zum Führungskörper (2) in Umfangsrichtung in unbelastetem Zustand freibeweglich angeordnet sind (d.h. einen freien Abstand zum Führungskörper (2) einnehmen), ohne beweglich in radialer Richtung zu sein.

2. Überlastkupplung nach Anspruch 1,
**dadurch gekennzeichnet,**
daß mindestens eine der Arbeitsflächen (210, 220) eines Fensters (20) des Führungskörpers (2) zumindest bereichsweise in Richtung der Ausnehmungen (10) schräg öffnend ausgebildet ist.

3. Überlastkupplung nach Anspruch 1,
**dadurch gekennzeichnet,**
daß die sekundären Mitnehmer (4) als Gleitkörper ausgebildet sind.

4. Überlastkupplung nach Anspruch 1,
**dadurch gekennzeichnet,**
daß die Mitnehmer (3, 4) als Wälzkörper ausgebildet sind.

5. Überlastkupplung nach Anspruch 1,
**dadurch gekennzeichnet,**
daß die Richtung der zwischen dem primären Mitnehmer (3) und einer Flanke (11) der Ausnehmung (10) übertragenen Kraft gegen die Richtung der Federkraft um einen Neigungswinkel (N1) geneigt ist, der nicht größer ist, als der Neigungswinkel (N2) der Richtung der zwischen dem primären und sekundären Mitnehmer (3 und 4) übertragenen Kraft.

6. Überlastkupplung nach Anspruch 4,
**dadurch gekennzeichnet,**
daß die primären und sekundären Mitnehmer (3 und 4) mit konformen Profilen ausgebildet sind.

7. Überlastkupplung nach Anspruch 4,
**dadurch gekennzeichnet,**
daß primäre Mitnehmer (3) von einer Anzahl sie umgebender sekundärer Mitnehmer (4) allseitig geführt sind.

8. Überlastkupplung nach Anspruch 4,
**dadurch gekennzeichnet,**
daß primäre und sekundäre Mitnehmer (3 und 4) unterschiedliche Durchmesser aufweisen.

9. Überlastkupplung nach Anspruch 5,
**dadurch gekennzeichnet,**
daß der sekundäre Mitnehmer (4a) für eine Drehmomentenrichtung einen anderen Durchmesser aufweist als der sekundäre Mitnehmer (4b) für die entgegengerichtete Drehmomentenrichtung.

10. Überlastkupplung nach Anspruch 1,
**dadurch gekennzeichnet,**
daß die Druckscheibe (5) bezüglich des Kupplungskörpers (1) mittels einer Keil- und Nutanordnung (54 und 14) axial verschiebbar geführt ist, wobei die einander zugewandten Seiten (235 und 55) des Führungskörpers (2) und der Druckscheibe (5) mit einer Zahn- und Lückenkombination (53, 23) versehen sind, welche in nur einer oder mehreren vorgegebenen Drehpositionen kuppelbar ist.

11. Überlastkupplung nach Anspruch 1,
**dadurch gekennzeichnet,**
daß der Führungskörper (2) mit mindestens einem Anschlag (24, 26, 27) ausgestattet ist, der in den Weg mindestens eines an der Druckscheibe (5) vorgesehenen Anschlages (50) eingreift.

12. Überlastkupplung nach Anspruch 11,
**dadurch gekennzeichnet,**
daß die Anschläge (50, 26, 24) die Drehung der nach Überlast ausgehobenen Druckscheibe (5) gegen den Führungskörper (2) begrenzen.

13. Überlastkupplung nach Anspruch 11,
**dadurch gekennzeichnet,**
daß die Anschläge (50, 27) den axialen Rückweg der ausgehobenen Druckscheibe (5) zum Führungskörper (2) begrenzen.

14. Überlastkupplung nach einem der Ansprüche 1 bis 13,
**dadurch gekennzeichnet,**
daß der Kupplungskörper (1) mit einer die Ausnehmungen (10) verbindenden Umlaufbahn (15, 16, 151) ausgestattet ist.

15. Überlastkupplung nach Anspruch 14,
**dadurch gekennzeichnet,**
daß die Umlaufbahn (16) für die radiale Führung der primären Mitnehmer (3) ausgebildet ist.

16. Überlastkupplung nach einem der Ansprüche 1 bis 15,
**dadurch gekennzeichnet,**
daß die Druckscheibe (5) mit einer Umlaufbahn (56) für die radiale Führung der sekundären Mitnehmer (4) ausgestattet ist.

17. Überlastkupplung nach einem der Ansprüche 1 bis 16,
**dadurch gekennzeichnet,**
daß mindestens ein Abstützkörper (51, 7) zwischen dem sekundären Mitnehmer (4) und der Druckscheibe (5) vorgesehen ist.

18. Überlastkupplung nach einem der Ansprüche 1 bis 17,
**dadurch gekennzeichnet,**
daß die Federanordnung (6) und die Druckscheibe (5) über einen Wälzkörper als Druckkörper (61) abgestützt sind.

## Claims

1. Slip clutch with a clutch body (1), the planar surface (15) of which has recesses (10), several blocking bodies which are distributed around the circumference and consist of primary and secondary entrainers (3, 4), a guide body (2) in which the secondary entrainers (4) are arranged and bias the primary entrainers (3) into the flanks (11,12) of the recesses (10) by means of a spring force acting axially in the principal direction, wherein at least one secondary entrainer (4) directly biases a primary entrainer (3) in circumferential direction under the action of the spring force, characterised in that the primary entrainers (3) are arranged to be freely movable relative to the guide body (2) in circumferential direction in the unloaded state (i.e. adopt a free spacing relative to the guide body (2)) without being movable in radial direction.

2. Slip clutch according to claim 1, characterised in that at least one of the work surfaces (210, 220) of a window (20) of the guide body (2) is formed to be obliquely open at least in regions in the direction of the recesses (10).

3. Slip clutch according to claim 1, characterised in that the secondary entrainers (4) are constructed as slide bodies.

4. Slip clutch according to claim 1, characterised in that the entrainers (3, 4) are constructed as rollable bodies.

5. Slip clutch according to claim 1, characterised in that the direction of the force transmitted between the primary entrainer (3) and a flank (11) of the recess (10), is inclined relative to the direction of the spring force by an angle of inclination (N1) which is not larger than the angle of inclination (N2) of the direction of the force transmitted between the primary and secondary entrainers (3 and 4).

6. Slip clutch according to claim 4, characterised in that the primary and secondary entrainers (3 and 4) are constructed with conforming profiles.

7. Slip clutch according to claim 4, characterised in that the primary entrainers (3) are guided all round by a number of secondary entrainers (4) surrounding them.

8. Slip clutch according to claim 4, characterised in that the primary and secondary entrainers (3 and 4) have different diameters.

9. Slip clutch according to claim 5, characterised in that the secondary entrainer (4a) has for one torque direction a different diameter than the secondary entrainer (4b) has for the opposite torque direction.

10. Slip clutch according to claim 1, characterised in that the pressure plate (5) is guided to be axially displaceable with respect to the clutch body (1) by means of a key and groove arrangement (54 and 14), wherein the mutually facing sides (235 and 55) of the guide body (2) and the pressure plate (5) are provided with a tooth and gap combination (53, 23) which can be coupled in only one or more predetermined rotational positions.

11. Slip clutch according to claim 1, characterised in that the guide body (2) is equipped with at least one abutment (24, 26, 27) which engages into the path of at least one abutment (50) provided at the pressure plate (5).

12. Slip clutch according to claim 11, characterised in that the abutments (50, 26, 24) limit the rotation relative to the guide body (2) of the pressure plate (5) raised off after overloading.

13. Slip clutch according to claim 11, characterised in that the abutments (50, 27) limit the axial return travel relative to the guide body (2) of the raised-off pressure plate (5).

14. Slip clutch according to one of claims 1 to 13, characterised in that the coupling body (1) is equipped with an encircling track (15, 16, 151) connecting the recesses (10.

15. Slip clutch according to claim 14, characterised in that the encircling track (16) is formed for radial guidance of the primary entrainers (3).

16. Slip clutch according to one of claims 1 to 15, characterised in that the pressure plate (5) is equipped with an encircling track (56) for the radial guidance of the secondary entrainers (4).

17. Slip clutch according to one of claims 1 to 16, characterised in that at least one support body (51, 7) is provided between the secondary entrainer (4) and the pressure plate (5).

18. Slip clutch according to one of claims 1 to 17, characterised in that the spring arrangement (6) and the pressure plate (5) are supported by way of a rollable body as pressure body (61).

## Revendications

1. Embrayage de surcharge présentant un corps d'accouplement (1), dont la surface transversale (15) présente des évidements (10), plusieurs corps d'arrêt répartis sur la périphérie, constitués par des tenons d'entraînement (3, 4) primaires et secondaires, un corps de guidage (2), dans lequel sont disposés les tenons d'entraînement (4) secondaires et qui exercent un effet de prétension sur les tenons d'entraînement (3) primaires dans les flancs (11, 12) des évidements (10) à l'aide d'une force de ressort agissant axialement dans la direction principale, au moins un tenon d'entraînement (4) secondaire exerçant directement un effet de prétension sur un tenon d'entraînement (3) primaire sous l'effet de la force de ressort dans la sens de la périphérie, caractérisé en ce que les tenons d'entraînement primaires (3) sont disposés de manière à pouvoir se mouvoir librement, à l'état non sollicité, dans le sens de la périphérie par rapport au corps de guidage (2) (c'est-à-dire qu'ils peuvent se trouver à une distance libre par rapport au corps de guidage (2)), sans pouvoir être mus dans le sens radial.

2. Embrayage de surcharge selon la revendication 1, caractérisé en ce qu'au moins une des surfaces de travail (210, 220) d'une fenêtre (20) du corps de guidage (2) est exécutée, au moins sur une plage, en s'ouvrant de biais dans le sens des évidements.

3. Embrayage de surcharge selon la revendication 1, caractérisé en ce que les tenons d'entraînement (4) secondaires sont exécutés sous forme de pièces coulissantes.

4. Embrayage de surcharge selon la revendication 1, caractérisé en ce que les tenons d'entraînement (3, 4) sont exécutés sous forme de cylindres.

5. Embrayage de surcharge selon la revendication 1, caractérisé en ce que le sens de la force transmise entre les tenons d'entraînement (3) primaires et un flanc (11) de révidement (10) est incliné d'un angle d'inclinaison (N1) par rapport au sens de la force de ressort qui n'est pas supérieur à l'angle d'inclinaison (N2) du sens de la force transmise entre les tenons d'entraînement (3, 4) primaires et secondaires.

6. Embrayage de surcharge selon la revendication 4, caractérisé en ce que les tenons d'entraînement (3 et 4) primaires et secondaires sont exécutés avec des profils conformes.

7. Embrayage de surcharge selon la revendication 4, caractérisé en ce que les tenons d'entraînement (3) primaires sont guidés de tous les côtés par un certain nombre de tenons d'entraînement (4) secondaires qui les entourent.

8. Embrayage de surcharge selon la revendication 4, caractérisé en ce que les tenons d'entraînement (3 et 4) primaires et secondaires présentent des diamètres différents.

9. Embrayage de surcharge selon la revendication 5, caractérisé en ce que le tenon d'entraînement (4a) secondaire présente un autre diamètre pour une direction du couple que le tenon d'entraînement (4b) secondaire pour la direction opposée du couple.

10. Embrayage de surcharge selon la revendication 1, caractérisé en ce que le disque de pression (5), eu égard au corps d'accouplement (1), est guidé de manière à pouvoir être déplacé axialement à l'aide d'une disposition de clavettes et de rainures (54 et 14), les deux côtés (235 et 55) du corps de guidage (2) et du disque de pression (5) se faisant face étant équipés d'une combinaison de dents et de creux (53, 23), qui ne peut être accouplée que dans une seule position de rotation ou plusieurs positions de rotation prédéfinies.

11. Embrayage de surcharge selon la revendication 1, caractérisé en ce que le corps de guidage (2) est pourvu d'au moins une butée (24, 26, 27) qui agrippe sur son parcours au moins une des butées (50) prévues sur le disque de pression (5).

12. Embrayage de surcharge selon la revendication 11, caractérisé en ce que les butées (50, 26, 24) limitent la rotation du disque de pression soulevé en fonction de la surcharge contre le corps de guidage (2).

13. Embrayage de surcharge selon la revendication 11, caractérisé en ce que les butées (50, 27) limitent le retour axial vers le corps de guidage (2) du disque de pression (5) soulevé.

14. Embrayage de surcharge selon l'une des revendications 1 à 13, caractérisé en ce que le corps d'accouplement (1) est pourvu d'une voie de rotation (15, 16, 151) qui relie les évidements (10).

15. Embrayage de surcharge selon la revendication 1 à 14, caractérisé en ce que la voie de rotation (16) est exécutée pour le guidage radial de tenons d'entraînement (3) primaires.

16. Embrayage de surcharge selon l'une des revendications 1 à 15, caractérisé en ce que le disque de pression (5) est équipé d'une voie de rotation (56) pour le guidage radial des tenons d'entraînement (4) secondaires.

17. Embrayage de surcharge selon l'une des revendications 1 à 16, caractérisé en ce qu'on a prévu au moins un corps d'appui (51, 7) entre le tenon d'entraînement (4) secondaire et le disque de pression (5).

18. Embrayage de surcharge selon l'une des revendications 1 à 17, caractérisé en ce que le dispositif à ressort (6) et le disque de pression (5) sont appuyés via un cylindre en tant que corps de pression (61).
